(19) Europäisches Patentamt
European Patent Office
Office européen des brevets

(11) EP 1 897 686 A1

(12) EUROPEAN PATENT APPLICATION
published in accordance with Art. 153(4) EPC

(43) Date of publication:
12.03.2008 Bulletin 2008/11

(21) Application number: 06757401.2

(22) Date of filing: 19.06.2006

(51) Int Cl.:
*B32B 27/30* (2006.01) *B32B 1/08* (2006.01)
*F16L 11/04* (2006.01)

(86) International application number:
PCT/JP2006/312259

(87) International publication number:
WO 2006/135091 (21.12.2006 Gazette 2006/51)

(84) Designated Contracting States:
AT BE BG CH CY CZ DE DK EE ES FI FR GB GR HU IE IS IT LI LT LU LV MC NL PL PT RO SE SI SK TR

(30) Priority: 17.06.2005 JP 2005178441
22.09.2005 JP 2005276876

(71) Applicant: DAIKIN INDUSTRIES, LTD.
Kita-ku, Osaka 530-8323 (JP)

(72) Inventors:
- KITAHARA, Takahiro, c/o DAIKIN INDUSTRIES, LTD. Osaka 566-8585 (JP)
- SAKAKIBARA, Shingo, c/o DAIKIN INDUSTRIES, LTD. Osaka 566-8585 (JP)
- SHIMONO, Takeshi, c/o DAIKIN INDUSTRIES, LTD. Osaka 566-8585 (JP)
- INABA, Takeshi, c/o DAIKIN INDUSTRIES, LTD. Osaka 566-8585 (JP)

(74) Representative: HOFFMANN EITLE
Patent- und Rechtsanwälte
Arabellastrasse 4
81925 München (DE)

# (54) MULTILAYER BODY

(57) The present invention provides a laminate which is highly impermeable to fuels and has high fuel crack resistance. The present invention is a laminate having:
a layer (A) comprising a fluorinated ethylenic polymer;
a layer (B) comprising a chlorotrifluoroethylene copolymer; and
a layer (C) comprising a fluorine-free organic material (P); the fluorinated ethylenic polymer being different from the chlorotrifluoroethylene copolymer forming the layer (B) in one and the same laminate and the layer (A) , the layer (B) , and the layer (C) being bonded together in that order.

EP 1 897 686 A1

## Description

TECHNICAL FIELD

The present invention relates to a laminate.

BACKGROUND ART

It is an increasing current trend to use resin laminates as piping materials for transferring gasoline or a like fuel from the processability, rust prevention, lightweight and economy viewpoint. With the tightening of restrictions on fuel evaporative emissions, however, the demand for more increased resistance to fuel permeation is growing.
A disclosure has been made, as a fuel-impermeable resin laminate, of a resin tube made of a laminate composed of a layer based on at least one resin species selected from the group consisting of polybutylene terephthalate [PBT], polybutylene naphthalate [PBN], polyethylene terephthalate [PET] and polyethylene naphthalate [PEN] and a PBT-based layer (cf. e.g. Patent Document 1: Japanese Kokai (Laid-open) Publication 2002-213655) or a resin tube comprising a resin layer based on polyphenylene sulfide [PPS] and a PBT-based resin layer (cf. e. g. Patent Document 2: Japanese Kokai Publication 2002-267054). However, each has a problem in that it is unsatisfactory in thermal stability, chemical resistance and solvent resistance, among others.
Fluororesins are resins excellent in thermal stability, chemical resistance and solvent resistance. However, fluororesins are inferior in mechanical strength and dimensional stability and are expensive and, therefore, are desirably used in producing laminates with some other organic material or materials.
As regards laminates made of a fluororesin and other organic materials and showing resistance to fuel permeation, there have been proposed a three-layer laminate composed of a polyamide 12 [PA12] layer, a tetrafluoroethylene [TFE] /perfluoro (methyl vinyl ether) [PMVE] copolymer layer and an ethylene/TFE copolymer [ETFE] layer provided with electric conductivity and a three-layer laminate composed of a PA12 layer, a TFE/hexafluoropropylene [HFP] copolymer [FEP] layer and an ETFE layer provided with electric conductivity (cf. e.g. Patent Document 3: International Laid-open Publication WO 01/18142). In recent years, however, higher levels of resistance to fuel permeation than those levels attainable with these three-layer laminates have been demanded.
From the viewpoint of attaining high levels of fuel permeation resistance of laminates consisting of fluororesin layers and a fluorine-free organic material layer, it has been disclosed that the lamination of a chlorotrifluoroethylene [CTFE] copolymer layer and a TFE/perfluoro (alkyl vinyl ether) [PAVE] copolymer or TFE/HFP/PAVE copolymer layer as fluororesin layers is possible owing to compatibility-due interlaminar adhesion without introducing any adhesive functional group (cf. e.g. Patent Document 4: Japanese Kokai Publication 20004-358959). However, when laminates of this kind are used as fuel transfer piping materials, for instance, the innermost layer thereof sometimes shows unfavorably poor fuel crack resistance. There is no disclosure at all about the use of a CTFE copolymer layer as an intermediate layer.

DISCLOSURE OF INVENTION

PROBLEMS WHICH THE INVENTION IS TO SOLVE

In view of the above-discussed state of the art, it is an object of the present invention to provide a laminate which is highly impermeable to fuels and has high fuel crack resistance.
The present invention is a laminate having:

a layer (A) comprising a fluorinated ethylenic polymer;
a layer (B) comprising a chlorotrifluoroethylene copolymer; and
a layer (C) comprising a fluorine-free organic material (P); the fluorinated ethylenic polymer being different from the chlorotrifluoroethylene copolymer forming the layer (B) in one and the same laminate and the layer (A) , the layer (B) , and the layer (C) being bonded together in that order.
In the following, the invention is described in detail.

The laminate of the invention is a laminate having a layer (A) comprising a fluorinated ethylenic polymer, a layer (B) comprising a chlorotrifluoroethylne [CTFE] copolymer and a layer (C) comprising a fluorine-free organic material (P).
The laminate of the invention has a layer (B) comprising a CTFE copolymer.
The CTFE copolymer is preferably one constituted of chlorotrifluoroethylene units [CTFE units] and monomer (A) units derived from a monomer (A) copolymerizable with CTFE (hereinafter such copolymer is sometimes referred to as "CTFE copolymer (I)").

The term "unit" as used herein referring to a certain monomer means that section which is derived from the monomer and constitutes a part of the molecular structure of a polymer. For example, each "CTFE unit", as mentioned above, is the CTFE-derived section [-CFCl-$CF_2$-] in the molecular structure of the CTFE copolymer. Likewise, each "monomer (A) unit", as mentioned above, is the section resulting from addition of the monomer (A) in the molecular structure of the CTFE copolymer. As used herein, the mole percent for each monomer unit species is the percentage of the monomer from which monomer units of that species are derived, with the total number of moles of those monomers from which all monomer units constituting the molecular chain of the copolymer are derived being taken as 100 mole percent.

The monomer (A) is not particularly restricted but may be any monomer copolymerizable with CTFE. It may comprise one single species or two or more species. It includes tetrafluoroethylene [TFE], ethylene [Et], vinylidene fluoride [VdF], a fluoroolefin represented by the general formula (i) :

$$CX^3X^4=CX^1(CF_2)_nX^2 \qquad (i)$$

(wherein $X^1$, $X^3$ and $X^4$ are the same or different and each represents hydrogen atom or fluorine atom, $X^2$ represents hydrogen atom, fluorine atom or chlorine atom and n represents an integer of 1 to 10), a perfluoro(alkyl vinyl ether) [PAVE] represented by the general formula (ii):

$$CF_2=CF\text{-}ORf^1 \qquad (ii)$$

(wherein $Rf^1$ represents a perfluoroalkyl group containing 1 to 8 carbon atoms), and alkyl perfluorovinyl ether derivatives represented by the general formula (iii):

$$CF_2=CF\text{-}OCH_2\text{-}Rf^2 \qquad (iii)$$

(wherein $Rf^2$ is a perfluoroalkyl group containing 1 to 5 carbon atoms), among others.

The monomer (A) preferably comprises at least one species selected from the group consisting of TFE, Et, VdF, fluoroolefin represented by the general formula (i), and PAVE represented by the general formula (ii).

The monomer (A) may comprise one single species or a combination of two or more species each of the fluoroolefin represented by the general formula (i), PAVE represented by the general formula (ii), and/or alkyl perfluorovinyl ether derivative of general formula (iii).

The vinyl monomer represented by the general formula (i) is not particularly restricted but includes, among others, hexafluoropropylene [HFP], perfluoro(1,1,2-trihydro-1-hexene), perfluoro(1,1,5-trihydro-1-pentene) and a perfluoro(alkyl)ethylene represented by the general formula (iv) :

$$H_2C=CX^5Rf^3 \qquad (iv)$$

(wherein $X^5$ is H, F or $CF_3$ and $Rf^3$ is a perfluoroalkyl group containing 1 to 10 carbon atoms).
Preferred as the perfluoro(alkyl)ethylene is perfluoro(butyl)ethylene.

As PAVE represented by the general formula (ii), there may be mentioned perfluoro(methyl vinyl ether) [PMVE], perfluoro(ethyl vinyl ether) [PEVE], perfluoro(propyl vinyl ether) [PPVE] and perfluoro(butyl vinyl ether), among others, and PMVE, PEVE or PPVE is preferred.

Preferred as the alkyl perfluorovinyl ether derivative represented by the general formula (iii) are those in which $Rf^2$ is a perfluoroalkyl group containing 1 to 3 carbon atoms.
$CF_2=CF\text{-}OCH_2\text{-}CF_2CF_3$ is more preferred.

Also usable as the monomer (A) is an unsaturated carboxylic acid copolymerizable with CTFE.

The unsaturated carboxylic acid is not particularly restricted but includes unsaturated aliphatic carboxylic acids containing 3 to 6 carbon atoms, including unsaturated aliphatic polycarboxylic acids containing 3 to 6 carbon atoms, such as, for example, (meth)acrylic acid, crotonic acid, maleic acid, fumaric acid, itaconic acid, citraconic acids, mesaconic acid and aconitic acid.

The unsaturated aliphatic polycarboxylic acids are not particularly restricted but include, among others, maleic acid, fumaric acid, itaconic acid, citraconic acid, mesaconic acid and aconitic acid, and the acid anhydrides thereof when they can take an acid anhydride form, such as maleic acid, itaconic acid and citraconic acid.

While the monomer (A) may comprise two or more species, the combined use of itaconic acid, citraconic acid, and/or the acid anhydride thereof may not be necessary when one of the species comprises VdF, a PAVE and/or HFP.

The CTFE copolymer (I) is preferably constituted of 2 to 98 mole percent of CTFE unit and 98 to 2 mole percent of a monomer (A) unit.

The monomer (A) unit content in the CTFE copolymer of the invention is the value obtained by such an analytical

technique as $^{19}F$-NMR and, more specifically, is the value obtained by appropriately selecting or combining NMR spectrometry, infrared spectrophotometry [IR], elemental analysis and/or fluorescent X ray analysis according to the monomer species.

The above-mentioned CTFE copolymer is more preferably a CTFE copolymer constituted of CTFE unit, tetrafluoroethylene unit [TFE unit] and a monomer (M) unit derived from a monomer (M) copolymerizable with CTFE and TFE (such copolymer is hereinafter sometimes referred to as "CTFE copolymer (II)").

Each "TFE unit" so referred to herein is the segment [$-CF_2-CF_2-$] derived from tetrafluoroethylene and occurring in the molecular structure of the CTFE copolymer (II). Similarly, each "monomer (M) unit" is the segment derived from the monomer (M) by addition thereof to the molecular structure of the CTFE copolymer.

The monomer (M) is not particularly restricted but may be any monomer containing one or more fluorine atoms within the molecule thereof and copolymerizable with CTFE and TFE. As examples, there may be mentioned those enumerated hereinabove referring to the monomer (A), excluding TFE.

The monomer (M) preferably comprises at least one species selected from the group consisting of Et, VdF, a fluoroolefin represented by the general formula (i) and a PAVE represented by the general formula (ii) given hereinabove.

In the CTFE copolymer (II), the monomer (M) unit preferably amounts to 10 to 0.1 mole percent and the sum of the CTFE unit and the TFE unit amounts to preferably 90 to 99.9 mole percent. At monomer (M) unit content levels below 0.1 mole percent, the resulting copolymer tends to be inferior in moldability, environmental stress cracking resistance and stress cracking resistance and, at levels exceeding 10 mole percent, the copolymer tends to be inferior in low chemical liquid permeability, thermal stability, and mechanical characteristics.

When the monomer (M) is a PAVE, a more preferred lower limit to the monomer (M) unit content is 0.5 mole percent, a more preferred upper limit thereto is 5 mole percent.

The monomer (M) unit content in the CTFE copolymer of the invention is the value obtained by such an analytical technique as $^{19}F$-NMR and, more specifically, is the value obtained by appropriately selecting or combining NMR spectrometry, infrared spectrophotometry [IR], elemental analysis and/or fluorescent X ray analysis according to the monomer species.

When the term "CTFE copolymer" is used herein without adding such a symbol (I) or (II), the term includes, within the meaning thereof, both the CTFE copolymers (I) and the CTFE copolymers (II).

The CTFE copolymer constituting the layer (B) may be a binary copolymer or a terpolymer or further multicomponent copolymer. As the binary copolymer, there may be mentioned CTFE/TFE copolymer, CTFE/PAVE copolymer, CTFE/VdF copolymer, and CTFE/HFP copolymer, among others. As the terpolymer (ternary polymer) and further multicomponent copolymers, there may be mentioned CTFE/TFE/HFP copolymer, CTFE/TFE/VdF copolymer, CTFE/TFE/PAVE copolymer, CTFE/TFE/HFP/PAVE copolymer and CTFE/TFE/VdF/PAVE copolymer, among others. Among them, CTFE/TFE/PAVE copolymer is preferred.

The CTFE copolymer mentioned above may be a copolymer of CTFE and Et and/or a fluoromonomer. As a CTFE copolymer having such a copolymer composition, there may be mentioned, for example, CTFE/Et copolymer, CTFE/TFE/Et copolymer and CTFE/TFE/Et/PAVE copolymer.

The above CTFE copolymer may be a polymer constituting either a resin or an elastomer, and preferably is a resin-constituting one.

The above CTFE copolymer can be obtained by any of the polymerization methods known in the art, for example solution polymerization, emulsion polymerization and suspension polymerization. However, it is preferably one obtained by suspension polymerization from the industrial viewpoint.

The above CTFE copolymer preferably has a melting point [Tm] of 150 to 280ºC. A more preferred lower limit is 160ºC, a still more preferred lower limit is 170ºC, a particularly preferred upper limit is 190ºC, and a more preferred upper limit is 260ºC.

The melting point [Tm] is the temperature corresponding to the melting peak as observed upon raising the temperature at a rate of 10ºC/minute using a differential scanning calorimeter [DSC].

The CTFE copolymer mentioned above, when subjected to a heating test, preferably shows a temperature [Tx] of not lower than 370ºC at which 1% by mass of the CTFE copolymer is decomposed. A more preferred lower limit is 380ºC and a still more preferred lower limit is 390ºC. Within the above range, an upper limit to the above-defined thermal decomposition temperature [Tx] may be set at 450ºC, for instance.

The thermal decomposition temperature [Tx] is the value obtained by using an apparatus for thermogravimetry/differential thermal analyzer [TG-DTA] and measuring the temperature at which the loss in mass of the CTFE copolymer subjected to the heating test amounts to 1 % by mass.

The above CTFE copolymer preferably shows a difference [Tx - Tm] of 130ºC or greater between the melting point [Tm] and the temperature [Tx] causing 1% by mass decomposition of the CTFE copolymer. When such difference is smaller than 130ºC, the temperature range within which molding is possible becomes so narrow that the range of choice of molding conditions becomes narrow. Because of its broad temperature range within which molding is possible, as mentioned above, the CTFE copolymer mentioned above, when subjected to coextrusion molding, can be coextruded

with a high-melting polymer as the counterpart.

In the case of melt molding or heat treatment at a temperature lower than 320ºC, the CTFE copolymer of the invention preferably contains an adhesive functional group or groups. The term "adhesive functional group" as used herein means a group which constitutes a part of the molecular structure of a polymer contained in the CTFE copolymer and is capable of participating in the adhesion between the layer (B) comprising the CTFE copolymer and a layer adjacent to the layer (B). The adhesive functional group may be any moiety capable of being involved in such adhesion and includes, within the meaning thereof, those generally called functional groups but also those generally called bonds such as ether bonding.

The adhesive functional group is not particularly restricted but may be any of those capable of being involved in the adhesion between the layer (B) and a layer adjacent to the layer (B), including carbonyl, hydroxyl and amino groups, among others.

The "carbonyl group" so referred to herein is a divalent carbon-containing group comprising a carbon-oxygen double bond, typically the group represented by -C (=0)-. The carbonyl group is not particularly restricted but may be, for example, a carbonate group, haloformyl group, formyl group, carboxyl group, ester bond [-C(=O)O-], acid anhydride bond [-C(=O)O-C(=O)-], isocyanato group, amide group, imide group [-C(=O)-NH-C(=O)-], urethane bond [-NH-C(=O) O-], carbamoyl group [$NH_2$-C(=O)-], carbamoyloxy group [$NH_2$-C (=O) O-], ureido group [$NH_2$-C (=O)-NH- ] or oxamoyl group [$NH_2$-C(=O)-C(=O)-], or the like one constituting a part of the chemical structure.

The amide group mentioned above is a group represented by the general formula:

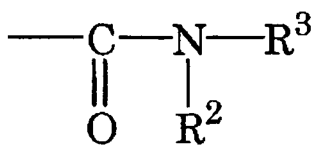

(wherein $R^2$ represents hydrogen atom or an organic group and $R^3$ represents an organic group).

The hydrogen atom or atoms each bound the nitrogen atom in the above-mentioned amide group, imide group, urethane bond, carbamoyl group, carbamoyloxy group, ureido group or oxamoyl group, for instance, each may be substituted by a hydrocarbon group such as an alkyl group.

Preferred as the adhesive functional group are amide, carbamoyl, hydroxyl, carboxyl and carbonate groups since these are easy to introduce and the coatings obtained show proper thermal stability and good adhesion at relatively low temperatures; among them, carbonate groups are preferred.

The above-mentioned carbonate group is represented by -OC(=O)O-R (in which R represents an organic group). As the organic group R in the above formula, there may be mentioned, for example, alkyl groups containing 1 to 20 carbon atoms, ether bond-containing alkyl groups containing 2 to 20 carbon atoms, etc. ; among them, alkyl groups containing 1 to 8 carbons, ether bond-containing alkyl groups containing 2 to 4 carbon atoms and the like are preferred. For example, -OC (=O) $OCH_3$, -OC (=O) $OC_3H_7$, -OC(=O)$OC_8H_{17}$, -OC(=O)$OCH_2CH_2CH_2OCH_2CH_3$ and the like may be mentioned as preferred examples.

When the CTFE copolymer is an adhesive functional group-containing one, the copolymer may comprise a polymer containing an adhesive functional group or groups at one or each main chain terminus or on one or more side chains or a polymer containing such groups at one or each main chain terminus and in one or more side chains. When the polymer main chain is an adhesive functional group-terminated one, each of the both termini of the main chain may have such group, or only either one of the termini may have such group. When the CTFE copolymer contains such an adhesive functional group or groups as mentioned above at one or each main chain terminus and/or in a side chain(s) and/or contains an adhesive functional group or groups each in the structural form generally called a bond such as an ether bond, such adhesive functional group or groups may be contained in the main chain. That the CTFE copolymer comprises a polymer whose main chain is an adhesive functional group-terminated one is preferred for the reason that such group or groups will not markedly lower the mechanical characteristics or chemical resistance of the copolymer and for reasons of advantageousness from the productivity and cost viewpoint.

The CTFE copolymer which comprises a polymer having adhesive functional group-containing side chains can be obtained by copolymerizing CTFE monomer with the monomer (A) or copolymerizing CTFE monomer with TFE monomer and the monomer (M). The term "adhesive functional group-containing monomer" as used herein means a monomer containing an adhesive functional group. The adhesive functional group-containing monomer may or may not contain a fluorine atom(s). Since, however, the above-mentioned monomer (A) and monomer (M) have no adhesive functional group and, in this respect, are conceptually distinguished from the adhesive functional group-containing

monomer which has an adhesive functional group.

Preferred as the adhesive functional group-containing monomer are unsaturated compounds represented by the general formula (v):

$$CX^6_2=CY^1- (Rf^4)_n-Z^1 \qquad (v)$$

(wherein $Z^1$ represents a hydroxyl, carbonyl or amino group-containing functional group, $X^6$ and $Y^1$ are the same or different and each represents hydrogen atom or fluorine atom, $Rf^4$ represents an alkylene group containing 1 to 40 carbon atoms, a fluorine-containing oxyalkylene group containing 1 to 40 carbon atoms, an ether bond-containing fluoroalkylene group containing 1 to 40 carbon atoms or an ether bond-containing, fluorine-containing oxyalkylene group containing 1 to 40 carbon atoms and n represents 0 or 1) . By saying "hydroxyl, carbonyl or amino group-containing functional group" herein, it is meant that the functional group in question may be a hydroxyl group or a carbonyl group or an amino group or a functional group containing any of these adhesive functional groups.

When the functional group is a carbonyl group-containing one, the above-mentioned adhesive functional group-containing monomer includes, among others, such fluorinated monomers as perfluoroacryloyl fluoride, 1-fluoroacryloyl fluoride, acryloyl fluoride, 1-trifluoromethacryloyl fluoride and perfluorobutenoic acid; and such fluorine-free monomers as acryloyl chloride and vinylene carbonate.

The above-mentioned adhesive functional group-containing monomer further includes unsaturated carboxylic acids. The unsaturated carboxylic acids as adhesive functional group-containing monomers, as so referred to herein, are preferably those ones which have at least one carbon-carbon unsaturated bond enabling copolymerization thereof (hereinafter also referred to as "copolymerizable carbon-carbon unsaturated bond") per molecule and further have at least one carbonyloxy group [-C(=O)-O-] per molecule.

As the above-mentioned unsaturated carboxylic acids, there may be mentioned, for example, aliphatic unsaturated carboxylic acids and acid anhydrides thereof. The aliphatic unsaturated carboxylic acids may be aliphatic unsaturated monocarboxylic acids or aliphatic unsaturated polycarboxylic acids containing two or more carboxyl groups.

As the aliphatic unsaturated monocarboxylic acids, there may be mentioned aliphatic monocarboxylic acids containing 3 to 20 carbon atoms, for example propionic acid, acrylic acid, methacrylic acid, crotonic acid, and the anhydrides thereof. As the aliphatic unsaturated polycarboxylic acids, there may be mentioned maleic acid, fumaric acid, mesaconic acid, citraconic acid [CAC], itaconic acid, aconitic acid, itaconic anhydride [IAH] and citraconic anhydride [CAH], among others.

Among the adhesive functional groups, those occurring at a main chain terminus (hereinafter also referred to as "unstable terminal groups") include the carbonate group, -COF, -COOH, $-COOCH_3$, $-CONH_2$, $-CH_2OH$ and the like. Such unstable terminal groups are generally formed at a main chain terminus upon addition of the chain transfer agent or the polymerization initiator used on the occasion of polymerization and each is derived from the structure of the chain transfer agent or polymerization initiator.

The CTFE copolymer, when it comprises a polymer whose main chain is an adhesive functional group-terminated one in which the adhesive functional group is a carbonate group, can be obtained by a method of polymerization using a peroxycarbonate as the polymerization initiator. The use of such method is preferred in view of the fact that the carbonate group introduction and the control of such introduction are very easy to make and also from the economical viewpoint and from the viewpoint of quality, including thermal stability and chemical resistance, among others.

Preferred as the peroxycarbonate are compounds represented by one of the following formulas:

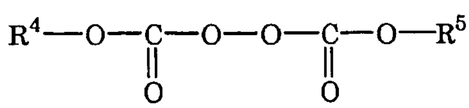

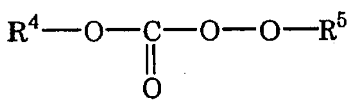

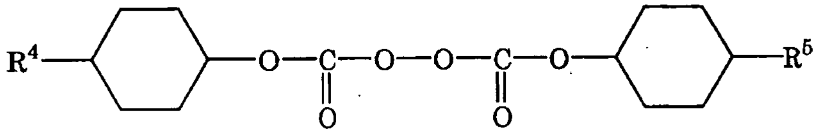

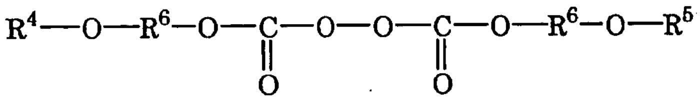

(In the above formulas, $R^4$ and $R^5$ are the same or different and each represents a straight or branched monovalent saturated hydrocarbon group containing 1 to 15 carbon atoms or an alkoxyl group-terminated straight or branched monovalent saturated hydrocarbon group containing 1 to 15 carbon atoms, and $R^6$ represents a straight or branched divalent saturated hydrocarbon group containing 1 to 15 carbon atoms or an alkoxyl group-terminated straight or branched divalent saturated hydrocarbon group containing 1 to 15 carbon atoms.)

Preferred as the peroxycarbonate, among others, are diisopropyl peroxycarbonate, di-n-propyl peroxydicarbonate, tert-butylperoxy isopropyl carbonate, bis(4-tert-butylcyclohexyl) peroxydicarbonate and di-2-ethylhexyl peroxydicarbonate.

When the CTFE copolymer comprises a polymer whose main chain is an adhesive functional group-terminated one in which the adhesive functional group is other than a carbonate group, a peroxide-derived adhesive functional group can be introduced therein, like in the case of the above-mentioned carbonate group introduction, by carrying out the polymerization using such a peroxide as a peroxycarbonate, peroxydicarbonate, peroxy ester or peroxyalcohol as the polymerization initiator. By saying "peroxide-derived", it is meant that the functional group in question is introduced directly from a functional group contained in the peroxide or indirectly by conversion of the functional group introduced directly from the functional group contained in the peroxide.

The level of addition of the polymerization initiator such as a peroxycarbonate or peroxy ester is preferably 0.05 to 5 parts by mass per 100 parts by mass of the polymer to be obtained, although it may vary depending on the kind, composition and molecular weight of the desired fluororesin, the polymerization conditions and the initiator species used, among others . A more preferred lower limit is 0.1 part by mass, and a more preferred upper limit is 1 parts by mass.

The number of unstable terminal groups may arbitrarily selected according to the kind of counterparts, shape, purpose of adhesion, intended purpose, desired adhesion force, and the difference of adhesion means with a layer adjacent to the layer (B) comprising the CTFE copolymer, for example a layer (A) as mentioned below.

In the case of melt molding at a molding temperature lower than 320ºC, the number of unstable terminal groups preferably 3 to 800 per 1 x $10^6$ carbon atoms. When that number is not larger than 3 per 1 x $10^6$ carbon atoms, the adhesiveness may decrease in certain cases. A more preferred lower limit is 50, a still more preferred lower limit is 80, and a particularly preferred lower limit is 120. When the number of unstable terminal groups is within the above range in the case of melt molding at a molding temperature lower than 320ºC, an upper limit may be set, for example, at 500 from the productivity viewpoint.

The number of unstable terminal groups is the number obtained by compression molding the CTFE copolymer in a powder form at a molding temperature higher by 50ºC than the melting point thereof and at a molding pressure of 5 MPa, subjecting the thus-obtained film sheet with a thickness of 0.25 to 0.30 mm to infrared absorption spectrometry, determining the species by comparison with infrared absorption spectra for known films and making a calculation based on the differential spectrum thereof according to the following formula: Number of terminal groups (per $10^6$ carbon atoms) = (1 x K)/t where:

I : Absorbance
K : Correction factor
T : Film thickness (mm)
The correction factors for the terminal groups in question are shown in Table 1.

Table 1

| Terminal group | Absorption frequency ($cm^{-1}$) | Correction factor |
|---|---|---|
| -COF | 1884 | 405 |
| -COOH | 1813, (1795-1792), 1775 | 455 |
| $-COOCH_3$ | 1795 | 355 |
| $-CONH_2$ | 3438 | 408 |
| $-CH_2OH$ | 3648 | 2325 |

The correction factors given in Table 1 are the values determined from infrared absorption spectra of model compounds for calculating the number of corresponding terminal groups per 1 x $10^6$ carbon atoms.

The CTFE copolymer mentioned above may contain one or more of such additives as fillers, pigments, electrically conductive materials, heat stabilizers, reinforcing agents and ultraviolet absorbers and, when it occurs as a rubber, it may contain one or more of such additives as crosslinking agents, acid acceptors, curing agents, curing promoters and curing catalysts.

The laminate of the invention which comprises the layer (B) comprising the above-mentioned CTFE copolymer and capable of serving as an adhesive layer can attain excellent fuel permeation resistance.

The laminate of the invention comprises a layer (A) comprising a fluorinated ethylenic polymer.

The fluorinated ethylenic polymer is a polymer whose repeating unit is derived from a fluorinated ethylenic monomer containing at least one fluorine atom.

As preferred examples of the fluorinated ethylenic polymer to be used in the practice of the invention, there may be mentioned, among others, fluorinated ethylenic polymers (III) to (V) whose main chain are composed at least of the following monomer units.

(III) A copolymer composed at least of TFE units and perfluoromonomer units derived from a perfluoromonomer represented by the general formula (vi):

$$CF_2=CF-Rf^5 \qquad (vi)$$

(wherein $Rf^5$ represents $CF_3$ or $ORf^6$ in which $Rf^6$ represents a perfluoroalkyl group containing 1 to 5 carbon atoms). The perfluoromonomer units may be of a single species or of two or more species.

(IV) A copolymer composed at least of TFE units and ethylene units [Et units].

(V) A copolymer composed at least of vinylidene fluoride units [VdF units].

So long as it is composed at least of TFE units and perfluoromonomer units derived from a perfluoromonomer represented by the above general formula (vi), the copolymer (III) may contain Et units and/or VdF units and, in this sense, can conceptually include the above-mentioned copolymer (IV) and/or copolymer (V) as well. Likewise, the above-mentioned copolymer (IV) can conceptually include the copolymer (III) and/or copolymer (V) as well, and the copolymer (V) can conceptually include the copolymer (III) and/or copolymer (IV) as well.

As the copolymer (III), there may be mentioned, for example:

(III-I) Copolymers having a TFE unit content of 70 to 95 mole percent, preferably 85 to 93 mole percent, and an HFP unit content of 5 to 30 mole percent, preferably 7 to 15 mole percent;

(III-II) Copolymers having a TFE unit content of 70 to 95 mole percent and a perfluoro (alkyl vinyl ether) unit [PAVE unit] content of 5 to 30 mole percent, wherein the PAVE unit content is the total content of units derived from one or two or more PAVE species represented by the general formula (vii):

$$CF_2=CF-ORf^7 \qquad (vii)$$

(wherein $Rf^7$ represents a perfluoroalkyl group containing 1 to 5 carbon atoms); and

(III-III) Copolymers having a TFE unit content of 70 to 95 mole percent and a sum of the HFP unit content and PAVE unit content of 5 to 30 mole percent, wherein the PAVE unit content is of one PAVE unit species or of two or more PAVE unit species.

The PAVE units may be of one species or of two or more species.

Such copolymers (III) as mentioned above are not particularly restricted but, for example, one of them may be used singly or two or more of them may be used in combination.

As the copolymer (IV), there may be mentioned, for example, polymers having a TFE unit content of 20 mole percent or higher and, as such, there may be mentioned, for example, copolymers composed of 20 to 80 mole percent of TFE units, 20 to 80 mole percent of Et units and 0 to 60 mole percent of units derived from a monomer(s) copolymerizable therewith.

As the above copolymerizable monomers, there may be mentioned, for example, fluoroolefins represented by the general formula (viii):

$$CX^9X^{10}=CX^7(CF_2)_nX^8 \qquad \text{(vii)}$$

(wherein $X^7$, $X^9$ and $X^{10}$ are the same or different and each represents hydrogen or fluorine atom, $X^8$ represents a hydrogen, fluorine or chlorine atom and n represents an integer of 1 to 10) and PAVEs represented by the general formula (ix):

$$CF_2=CF\text{-}ORf^8 \qquad \text{(ix)}$$

(wherein $Rf^8$ represents a perfluoroalkyl group containing 1 to 5 carbon atoms). These may be used singly or two or more of them may be used in combination.

Preferred among the copolymers (IV) are copolymers composed of 0 to 60 mole percent of the sum of fluoroolefin units derived from a f luoroolef in (s) represented by the above general formula (viii) and/or PAVE units derived from a PAVE(s) represented by the above general formula (ix), 20 to 80 mole percent of TFE units and 20 to 80 mole percent of Et units.

As such copolymers, there may be mentioned, for example:

(IV-I) Copolymers composed of 30 to 70 mole percent of TFE units, 20 to 55 mole percent of Et units and 0 to 10 mole percent of fluoroolefin units derived from a fluoroolefin(s) represented by the above general formula (viii);
(IV-II) Copolymers composed of 30 to 70 mole percent of TFE units, 20 to 55 mole percent of Et units, 1 to 30 mole percent of HFP units and 0 to 10 mole percent of units derived from a monomer(s) copolymerizable therewith;
(IV-III) Copolymers composed of 30 to 70 mole percent of TFE units, 20 to 55 mole percent of Et units and 0 to 10 mole percent of PAVE units derived from a PAVE(s) represented by the above general formula (ix);
and so forth. In the above-mentioned copolymers (IV to II), HFP is not included among the copolymerizable monomers.

The copolymers (IV) mentioned above may contain or may not contain those copolymer (IV)-constituting units derived from the copolymerizable monomer(s), including the cases where they are fluoroolefin units derived from a fluoroolefin(s) represented by the general formula (viii) and/or units derived form a PAVE(s) represented by the general formula (ix).

As the copolymer (V), there may be mentioned polymers having a VdF unit content of 10 mole percent or higher. Preferred as such are, for example, copolymers composed of 15 to 100 mole percent of VdF units, 0 to 85 mole percent of TFE units and 0 to 30 mole percent of the sum of HFP units and/or chlorotrifluoroethylene units.

As the copolymer (V), there may be mentioned, for example:

(V-I) Vinylidene fluoride homopolymers (hereinafter sometimes referred to as poly(vinylidene fluoride) [PVdF]);
(V-II) Copolymers composed of 30 to 99 mole percent of VdF units and 1 to 70 mole percent of TFE units;
(V-III) Copolymers composed of 10 to 90 mole percent of VdF units, 0 to 90 mole percent of TFE units and 0 to 30 mole percent of chlorotrifluoroethylene units; and
(V-IV) Copolymers composed of 10 to 90 mole percent of VdF units, 0 to 90 mole percent of TFE units and 0 to 30 mole percent of HFP units.

Preferred as the copolymers (V-IV) are copolymers composed of 15 to 84 mole percent of VdF units, 15 to 84 mole percent of TFE units and 0 to 30 mole percent of HFP units.

Among the monomer units constituting the copolymers (III) to (V), those which may amount to 0 (zero) mole percent in the respective copolymers may be contained or may not be contained in the respective copolymers.

The fluorinated ethylenic polymer in the above-mentioned layer (A) may be a CTFE copolymer but this copolymer is one different from the CTFE copolymer in the above-mentioned layer (B) in one and the same laminate.

The above-mentioned fluorinated ethylenic polymer is preferably a polymer comprising TFE-derived TFE units in view of its good fuel crack resistance.

The fluorinated ethylenic polymer may comprise a combination of two or more species. When two or more species are used in combination, the two or more fluorinated ethylenic polymers have good mutual compatibility and

can form a layer without showing any distinct boundary line, hence never leading to delamination. The mixing ratio is adjusted so that this layer as a whole may have a favorable permeability coefficient and a favorable melting point.

When the layer (A) in the laminate of the invention consists of two or more fluorinated ethylenic polymer, as mentioned above, the respective polymer species may be put into a coextruding machine to produce a laminate without preliminary blending, or layers separately produced may be placed on top of another, followed by melting by heating, for instance, whereby a high level of interlaminar adhesion within the layer (A) can be attained owing to the compatibility, without introducing such an adhesive functional group as mentioned above.

When two or more fluorinated ethylenic polymers are used, as mentioned above, the layer (A) in the laminate of the invention may be one formed after preparation of a polymer alloy by preliminarily mixing up the respective polymer species employed.

The fluorinated ethylenic polymer mentioned above may have such an adhesive functional group(s) as mentioned above at a main chain terminus or termini or on side chains.

The monomer unit proportions of the fluorinated ethylenic polymer to be used in the practice of the invention are the values obtained by an appropriate combination of $^{19}$F-NMR analysis, infrared spectrophotometry [IR], elemental analysis and fluorescent X ray analysis, as selected according to the monomer species.

The fluorinated ethylenic polymer mentioned above preferably has a melting point of 130 to 280ºC and, from the viewpoint of facilitating the coextrusion molding of the above-mentioned CTFE copolymer and a fluorine-free organic material (P), it more preferably has a melting point of 150 to 280ºC.
The melting point of the above-mentioned TFE-based polymer is the temperature corresponding to the melting peak as found by raising the temperature at a programming rate of 10ºC/minute using a differential scanning calorimeter [DSC].

The fluorinated ethylenic polymer mentioned above may be a polymer constituting either a resin or an elastomer. Preferably, however, it is one constituting a resin.

The fluorinated ethylenic polymer can be obtained by any of the conventional methods of polymerization, for example by solution polymerization, emulsion polymerization or suspension polymerization. From the industrial viewpoint, however, it is preferably one obtained by suspension polymerization.

The layer (A) in the laminate of the invention preferably further comprises an electrically conductive filler.

The electrically conductive filler is not particularly restricted but includes, for example, metals, carbon and like conductive simple substance powders or conductive simple substance fibers; powders of conductive materials such as zinc oxide; and surface-treated conductive powders.

The conductive simple substance powders or conductive simple substance fibers are not,particularly restricted but include, among others, powders of metals such as copper and nickel; metal fibers such as iron or stainless steel fibers; carbon black, carbon fibers, carbon fibrils described in Japanese Kokai Publication H03-174018.

The surface-treated conductive powders are powders obtained by subjecting glass beads, titanium oxide and like nonconductive powders to surface treatment for rendering the surface thereof electrically conductive. The method of rendering the surface conductive is not particularly restricted but includes, among others, metal sputtering and nonelectrolytic plating. Among the electrically conductive fillers mentioned above, carbon black is suitably used since it is advantageous from the economy and electrostatic charge accumulation prevention viewpoint.

In incorporating the above electrically conductive filler in the fluorinated ethylenic polymer, the resulting mixture is preferably made into pellets in advance by melt kneading.

As for the pellet heating conditions for pelletization after melt kneading, the pelletization is generally carried out at a temperature not lower than the glass transition temperature of the fluorinated ethylenic polymer but lower than the melting point of the fluorinated ethylenic polymer, usually at 130 to 200ºC, for 1 to 48 hours. By preparing pellets in advance, it becomes possible to uniformly disperse the electrically conductive filler in the fluorinated ethylenic polymer in the layer (A) to be obtained.

The level of addition of the electrically conductive filler is properly determined based on the fluorinated ethylenic polymer species, the conductivity performance characteristics required of the laminate, the molding conditions and other factors. Preferably, however, the addition level is 1 to 30 parts by mass per 100 parts by mass of the fluorinated ethylenic polymer. A more preferred lower limit thereto is 5 parts by mass, and a more preferred upper limit thereto is 20 parts by mass.

The fluorinated ethylenic polymer conductive composition resulting from incorporation of the electrically conductive filler into the fluorinated ethylenic polymer preferably has a surface resistance value of 1 x 10° to 1 x $10^9$ Ω· cm. A more preferred lower limit is 1 x $10^2$ Ω·cm, and a more preferred upper limit is 1 x $10^8$ Ω·cm.

The "surface resistance value of the fluorinated ethylenic polymer conductive composition" so referred to herein is the value obtained by charging the pellets obtained by melt kneading the electrically conductive filler and the fluorinated ethylenic polymer into a melt indexer, heating the charge in the melt indexer to a temperature arbitrarily selected within the range of 200 to 400ºC, extruding the melt and measuring the surface resistance value of the extrudate strand using a battery-powered insulation-resistance tester.

In the practice of the invention, the layer (A) may further contain, in addition to the above-mentioned electrically

conductive filler, one or more of various additives such as heat stabilizes and other stabilizers, reinforcing agents, fillers, ultraviolet absorbers and pigments, each at an addition level at which the object of the invention will not be defeated. By addition of such an additive or additives, the layer (A) can be improved in such characteristics as thermal stability, surface hardness, wear resistance, antistatic properties and weather resistance.

The laminate of the invention has a layer (C) comprising a fluorine-free organic material (P).

The fluorine-free organic material (P) is an organic material containing no fluorine atoms. The fluorine-free organic material (P) is preferably a resin coextrudable with the fluororesin to constitute the layers (A) and (B).

Since the laminate of the invention contains the above-mentioned layers (A) and (B) , the laminate as a whole can attain a high level of impermeability even when the layers (C) and (D) , as described later herein, are not so excellent in fuel impermeability. Therefore, the layers (C) and (D) are not necessarily required to be excellent in fuel impermeability. However, the use of a resin having chemical liquid impermeability, gas impermeability and fuel impermeability as the fluorine-free organic material (P) for constituting the layer (C) and a fluorine-free organic material (Q) for constituting a layer (D) are not excluded. The use of a resin having fuel impermeability is rather preferred.

The resin having fuel impermeability, which is to be used as the fluorine-free organic material (P) is preferably a resin comprising a polymer high in degree of crystallinity, more preferably a resin comprising a high crystallinity polymer containing a polar functional group species and showing a great intermolecular force.

The polar functional group is a functional group having polarity and capable of participating in the adhesion to the layer in contact with the layer (C). The polar functional group may be the same as the unstable terminal group or may be a different functional group.

The polar functional group is not particularly restricted but includes those mentioned above as unstable functional groups and, further, cyano and sulfide groups and so forth and, among others, carbonyloxy, cyano, sulfide and hydroxyl groups are preferred. The hydroxyl group is more preferred.

As the fluorine-free organic material, there may be mentioned, in addition to the above-mentioned polyamide resins and polyolefin resins, ethylene/vinyl alcohol copolymer-based resin, polyurethane resin, polyester resin, polyaramid resin, polyimide resin, polyamideimide resin, polyphenylene oxide resin, polyacetal resin, polycarbonate resin, acrylic resin, styrenic resin, acrylonitrile/butadiene/styrene [ABS] resin, vinyl chloride resin, cellulosic resin, polyetheretherketone [PEEK] resin, polysulfone resin, polyethersulfone [PES] resin, polyetherimide resin and polyphenylene sulfide resin, among others.

The above-mentioned fluorine-free organic material (P) preferably is at least one species selected from the group consisting of ethylene/vinyl alcohol copolymer-based resin, polyamide resin and polyolefin resin.

The polyamide resin comprises a polymer having an amide bond [-NH-C(=O)-] as the repeating unit in the molecule.

The polyamide resin may be either the so-called nylon resin comprising a polymer in which each amide bond in the molecule binds aliphatic structures or alicyclic structures together, or the so-called aramid resin comprising a polymer in which each amide bond in the molecule binds aromatic structures together.

The above-mentioned nylon resin is not particularly restricted but includes, among others, those comprising such polymers as nylon 6, nylon 66, nylon 11, nylon 12, nylon 610, nylon 612, nylon 6/66, nylon 66/12, nylon 46 and metaxylylenediamine/adipic acid copolymers. Two or more of these may also be used in combination.

The aramid resin is not particularly restricted but includes, for example, polyparaphenyleneterephthalamide and polymetaphenyleneisophthalamide.

The above polyamide resin may also comprise a polymer whose molecule partly contains a structure having no amide bond as the repeating unit as introduced therein by block copolymerization or graft copolymerization. As such polyamide resin, there may be mentioned, for example, nylon 6/polyester copolymer, nylon 6/polyether copolymer, nylon 12/polyester copolymer, nylon 12/polyether copolymer and like polyamide elastomer. These polyamide elastomers are obtained by block copolymerization, via ester bonding, of a nylon oligomer and a polyester oligomer, or by block copolymerization, via ether bonding, of a nylon oligomer and a polyether oligomer. As the polyester oligomer, there may be mentioned, for example, polycaprolactone and polyethylene adipate and, as the polyether oligomer, there may be mentioned, for example, polyethylene glycol, polypropylene glycol and polytetramethylene glycol. Preferred as the polyamide elastomer are nylon 6/polytetramethylene glycol copolymer and nylon 12/polytetramethylene glycol copolymer.

As the polyamide resin, there may be mentioned, among others, nylon 6, nylon 66, nylon 11, nylon 12, nylon 610, nylon 612, nylon 6/66, nylon 66/12, nylon 6/polyester copolymer, nylon 6/polyether copolymer, nylon 12/polyester copolymer and nylon 12/polyether copolymer since even when the polyamide resin layer is thin, these can provide sufficient levels of mechanical strength. It is also possible to use two or more of these in combination.

The above-mentioned polyolefin resin is a resin having a monomer unit derived from a vinyl group-containing monomer containing no fluorine atoms. The vinyl group-containing monomer containing no fluorine atoms is not particularly restricted but may be, for example, such a fluorine-free ethylenic monomer as mentioned above referring to the fluororesin. In the field of application where interlaminar adhesiveness to the counterpart material such as the layer (B) is required, such polar functional group-containing ones as mentioned above are preferred.

The polyolefin resin is not particularly restricted but includes, for example, polyethylene, polypropylene, high-density polyolefins and like polyolefins and, further, modified polyolefins, for example maleic anhydride modifications of the above-mentioned polyolefins.

In the practice of the invention, the layer (C) and a layer (D) , as described later herein, may further contain, in addition to the above-mentioned conductive material, one or more of various additives such as heat stabilizes and other stabilizers, reinforcing agents, fillers, ultraviolet absorbers and pigments, each at an addition level at which the object of the invention will not be defeated. By addition of such an additive or additives, layer (C) and layer (D) can be improved in such characteristics as thermal stability, surface hardness, wear resistance, antistatic properties and weather resistance.

The above-mentioned polyamide type resin preferably has an amine value of 10 to 60 (equivalents/$10^6$ g). So long as the amine value is within the above range, a high level of interlaminar bond strength can be attained between the layer (C) and such a layer in contact with the layer (C) as the layer (B) comprising a chlorotrifluoroethylene copolymer even on the occasion of coextrusion at relatively low temperatures. When the amine value is lower than 10 (equivalents/$10^6$ g), the interlaminar bond strength between the layer (C) and a layer in contact with the layer (C) will become insufficient on the occasion of coextrusion at relatively low temperatures. When it exceeds 60 (equivalents/$10^6$ g), the mechanical strength of the laminate obtained will be insufficient and, further, the polyamide resin tends to discolor during storage and is poor in handleability. A preferred lower limit is 15 (equivalents/$10^6$ g), a preferred upper limit is 50 (equivalents/$10^6$ g) and a more preferred upper limit is 35 (equivalents/$10^6$ g).

The amine value so referred to herein is the value determined by titrating, with a 1/10 N aqueous solution of p-toluenesulfonic acid using thymol blue as an indicator, a solution prepared by dissolving 1 g of the polyamide resin in 50 ml of m-cresol with heating. Unless otherwise specified, the amine value is the value of the polyamide resin before lamination. Among the total number of amino groups which the polyamide resin before lamination has, some are supposedly consumed for the adhesion to the layer (C) in contact with the polyamide resin. However, the number of such consumed amino groups is very small relative to the whole layer (C) and, therefore, the amine value of the polyamide resin before lamination is substantially the same as the amine value of the resin in the laminate of the invention.

The laminate of the invention may further comprise a layer (D) comprising a fluorine-free organic material (Q) between the above-mentioned layer (A) and layer (B).
The fluorine-free organic material (Q) in the layer (D) may be similar in kind to the fluorine-free organic material (P) in the layer (C) or different in kind from the material (P) . Preferably, however, the material (Q) is similar in kind to the material (P) and, more preferably, it is a polyamide resin. By providing such layer (D), it becomes possible to apply the technique of multilayer coextrusion molding with ease and, further, increase the line speed and improve the moldability. Even when the layer (A) is made of a non-perfluoro type fluororesin such as the above-mentioned copolymer (IV) , it is possible to carry out multilayer coextrusion molding and increase the line speed.

Among the above-mentioned layer (A) , layer (B) , layer (C) and layer (D) in the laminate of the invention, at least one preferably has a fuel permeability coefficient of about 0.5 g·mm/$m^2$/day or lower. The layer (A) and layer (B) each preferably has a fuel permeability coefficient of 0.4 g·mm/$m^2$/day or lower.

The fuel permeability coefficient, so referred to herein, is the value calculated from the change in mass of a sheet obtained from the measurement target resin placed in an isooctane/toluene/ethanol mixed solvent composed of isooctane, toluene and ethanol in a volume ratio of 45:45:10 in a fuel permeability coefficient measurement cup. The measurement is carried out at 60ºC.

The fluorinated ethylenic polymer in the layer (A) and the CTFE copolymer in the layer (B) preferably have a melt flow rate [MFR] of 0.1 to 70 (g/10 minutes). When the MFR is within the above range, the fuel permeation resistance and fuel crack resistance become better. A more preferred lower limit to the MFR is 1 (g/10 minutes) and a more preferred upper limit thereto is 50 (g/10 minutes).

The MFR is the value obtained by measuring, using a melt indexer, the mass of the CTFE copolymer flowing out through a nozzle with an inside diameter of 2 mm and a length of 8 mm at 297ºC under a load of 5 kg per 10 minutes.

Owing to its having the layer (A) comprising the fluorinated ethylenic polymer and the layer (B) comprising CTFE copolymer, the laminate of the invention can readily attain, for example, such a high level of resistance to fuel permeation that the fuel permeation rate falls within a range to be described below and, at the same time, can be excellent in fuel crack resistance.

The rate of fuel permeation through the laminate of the invention is preferably not higher than 1.5 g/$m^2$/day.

The laminate of the invention, for which the fuel permeation rate is within the above range, can have a high level of resistance to fuel permeation. So long as the fuel permeation rate is within the above range, a lower limit thereto may be set at 0.1 g/$m^2$/day. A preferred upper limit to the fuel permeation rate is 1.0 g/$m^2$/day, a more preferred upper limit thereto is 0.9 g/$m^2$/day and a still more preferred upper limit thereto is 0.8 g/$m^2$/day.

The fuel permeation rate so referred to herein is the mass of a fuel permeating per unit area per day and is the value obtained by measuring the rate of permeation of an isooctane/toluene/ethanol mixed solvent [CE10] composed of isooctane, toluene and ethanol in a volume ratio of 45:45:10 at 60ºC according to SAE J 1737.

The laminate of the invention preferably comprises the above-mentioned layer (A), layer (B) and layer (C) bonded together in that order.

The laminate of the invention may be one constituted of the layer (A) , layer (B) and layer (C) alone or one comprising a further layer or layers in addition to the layer (A), layer (B) and layer (C). The other layers are not particularly restricted but mention may be made of a protective layer for the laminate, a pigmented layer, a marking layer, and a dielectric layer for antistatic treatment, among others. In view of the function thereof, the protective layer or dielectric layer, for instance, preferably serves as the outermost layer.

When the laminate of the invention comprises a layer (D) comprising the fluorine-free organic material (Q) between the layer (A) and layer (B), it is preferred that the layer (D) be in contact with the layer (A) and layer (B) and the layer (B) be in contact with the layer (C).

As the laminate of the invention, there may be mentioned, for example, a laminate comprising the layer (A), layer (B) and layer (C) bonded together in that order, a laminate comprising the layer (A) , layer (B) , layer (C) and layer (A) bonded together in that order, a laminate comprising the layer (A), layer (D), layer (B) and layer (C) bonded together in that order, a laminate comprising the layer (A), layer (B), layer (C), layer (B) and layer (A) bonded together in that order, and a laminate comprising the layer (A), layer (D), layer (B), layer (C) and layer (A) bonded together in that order.

The above-mentioned layer (A), layer (B) layer (C) and layer (D) each may be a single layer or has a multilayer structure composed of two or more layers.

When the layer (A) has a multilayer structure, the layer (A) may contain a layer comprising the above-mentioned electrically conductive fluorinated ethylenic polymer composition and a layer comprising a fluorinated ethylenic polymer composition containing no conductive filler.

In the laminate of the invention, it is not always necessary that the boundary between neighboring layers in contact with each other be distinct. Thus, the boundary may show a layer structure having concentration gradients resulting from mutual penetration, from the contact surface, of molecular chains of the polymers constituting the neighboring layers.

In the laminate of the invention, the layer (B) is preferably in contact with the layer (A) and layer (C). When the CTFE copolymer in the layer (B) contains the adhesive functional groups mentioned above, the adhesion to the layer (A) and layer (C) can be made excellent. When the layer (A) is in contact with the layer (B), both the layers can show a sufficient level of adhesion owing to the compatibility between the CTFE copolymer and fluorinated ethylenic polymer without introduction of the above-mentioned adhesive functional groups. From the improved adhesion viewpoint, however, it is preferred that the CTFE copolymer in the layer (B) be an adhesive functional group-containing one. When an adhesive functional group-containing CTFE copolymer is used, a sufficient level of interlaminar adhesion can be attained even if the fluorinated ethylenic polymer in the layer (A) is one having no adhesive functional groups introduced therein.

As for the method of molding the laminate of the invention, there may be mentioned, for example, (1) the method comprising molding respective laminate-constituting layers by coextrusion in the molten state (coextrusion molding) to thereby form a laminate having a multilayer structure to thereby attain thermal fusion adhesion (melt adhesion) among layers in one step.

As other methods of molding the laminate of the invention in addition to the above (1), there may be mentioned, among others, (2) the method comprising placing respective layers prepared separately using extruders one on top of the other, followed by interlaminar adhesion by thermal fusion, (3) the method comprising forming a laminate by extruding, through an extruder, a molten resin onto the surface of a layer prepared in advance, and (4) the method comprising applying, in the manner of electrostatic coating, a polymer to constitute a neighboring layer onto the surface of a layer prepared in advance and heating the thus-obtained coated matter collectively or from the coated side to thereby form a layer by thermal melting of the polymer subjected to coating.

When the laminate of the invention is a tube or hose, there may be mentioned, for example, (2a) the method which corresponds to the above-mentioned method (2) and comprises separately forming respective cylindrical layers using extruders and covering the layer to become an inner layer with a neighboring layer by means of a heat-shrinkable tube, (3a) the method which corresponds to the above-mentioned method (3) and comprises first forming a layer to become an inner layer using an inner layer extruder and forming a layer coming in contact with the inner layer on the peripheral surface thereof using an outer layer extruder, and (4a) the method which corresponds to the above-mentioned method (4) and comprises applying, in the manner of electrostatic coating, a polymer to constitute an inner layer to the inside of a layer to come into contact with the inner layer and placing the coated matter in a heating oven to heat the same as a whole or inserting a rod-shaped heating device into the cylindrical coated article and heating the same from the inside, to thereby mold the inner layer by melting the inner layer-constituting polymer by heating.

When the materials for the respective layers constituting the laminate of the invention are coextrudable, it is a general practice to mold the laminate by the above-mentioned coextrusion method (1). As the techniques of the coextrusion molding mentioned above, there may be mentioned those multilayer coextrusion methods which are known in the art, for example the multi-manifold method and feed block method.

In the above-mentioned molding methods (2) and (3), the surface of a layer to come into contact with another

layer may be subjected to surface treatment so that the interlaminar adhesion may be enhanced. As such surface treatment, there may be mentioned etching treatment such as sodium etching treatment; corona treatment; and plasma treatment such as low-temperature plasma treatment.

Preferred as the method of molding are the above-mentioned method (1) and the above-mentioned methods (2) and (3) in which lamination is carried out after surface treatment. Most preferred is the method (1), however.

The laminate of the invention can be used in the following fields, among others.

Films, sheets: films for foods, sheets for foods, films for drugs, sheets for drugs, diaphragms for diaphragm pumps, and various packing members, etc.;

Tubes and hoses: tubes for fuels or hoses for fuels such as tubes for auto fuels or hoses for auto fuels, tubes for solvents or hoses for solvents, tubes for paints or hoses for paints, automotive radiator hoses, air conditioner hoses, brake hoses, electric wire coverings, tubes for foods and drinks or hoses for foods and drinks, gasoline stand tubes or hoses to be laid under the ground, tubes or hoses for submarine oil fields, etc.; Bottles, containers, tanks: automotive radiator tanks, fuel tanks such as gasoline tanks, solvent tanks, paint tanks, containers for chemicals such as containers for liquid chemicals used in semiconductor manufacture, tanks for foods and drinks, etc.;

Others: various automotive seals such as carburetor flange gaskets and fuel pump O rings, various machine-related seals such as seals for hydraulic machines, gears, etc.

Among those mentioned above, the laminate of the invention can be suitably used as a tube or hose.

The above-mentioned laminate in the form of a tube or hose also constitutes an aspect of the present invention.

The tube or hose may have a wavelike region in the middle thereof. Such wavelike region is formed by shaping an appropriate region in the middle of the hose as such into a wavelike, corrugated or convoluted shape, for instance.

When the tube or hose of the invention has a region provided with a plurality of such wave-shaped ring-like folds, one side of the rings in that region can be compressed and the other side can be extended outward, so that the tube or hose can be easily bent at an arbitrary angle without causing stress fatigue or delamination.

The method of shaping the wavelike region is not restricted but the region can be easily shaped by first molding a straight tube and then subjecting the same to mold forming, for instance, to a desired wavelike shape.

In the laminate of the invention which has the form of a tube or hose, the innermost layer of the tube or hose is preferably the layer (A). The inner most layer of a fuel tube which is in contact with a flammable liquid such as gasoline readily allows electrostatic charge accumulation and, therefore, for avoiding ignition due to this electrostatic charge accumulation, the layer (A) is preferably one containing an electrically conductive filler.

The laminate of the invention can be suitably used in the fields of application where there is at least one site which comes into contact with a fuel on the occasion of use, such as a tube, hose or tank, including a fuel tube. In that case, the site coming into contact with a fuel is preferably the layer (A) . The site coming into contact with a fuel is generally the inner layer and, therefore, when the layer (A) is the inner layer, the layer (B) becomes the intermediate layer and the layer (C) the outer layer. The "inner layer", "intermediate layer" and "outer layer" so referred to herein indicate only which of the layer (A) and layer (C) is on the inner side or outer side, or that a layer is disposed between these two, in a shape involving the concepts of outside and inside, such as in a tube, hose or tank, for instance. Thus, the laminate mentioned above may have another layer or other layers on the surface of the layer (B) which is opposite to the surface in contact with the layer (A) and/or between the layer (A) and layer (B) and/or between the layer (B) and layer (C) and/or on the surface of the layer (C) which is opposite to the surface in contact with the layer (B).

The "intermediate layer" so referred to herein conceptually indicates a layer between the above-mentioned inner layer and outer layer.

When the site coming into contact with a fuel in the laminate of the invention is the layer (A) , the layer (A) may be an innermost layer comprising a fluorinated ethylenic polymer-based conductive composition or may comprise a multilayer structure,comprising such an innermost layer as mentioned above and a layer occurring outside the innermost layer and comprising a fluorinated ethylenic polymer composition containing no conductive filler. In the latter, the innermost layer and the layer comprising a fluorinated ethylenic polymer composition containing no conductive filler may be in contact with each other. When the innermost layer and outermost layer each is the layer (A) , the laminate of the invention can be further improved in liquid chemical resistance.

The above-mentioned laminate to serve as an auto fuel delivery system tube also constituted an aspect of the present invention.

The laminate of the invention has good fuel permeation resistance and fuel crack resistance, as mentioned hereinabove, and can be suitably used as a laminated fuel tube to be used as an auto fuel delivery system tube.

The preferred layer constitution of the laminate for use as the auto fuel delivery system tube of the invention is not particularly restricted but mention may be made, for example, laminates comprising:

Layer 1: a layer comprising a fluorinated ethylenic polymer composition (which may be a conductive composition);
Layer 2: a layer comprising a CTFE copolymer and
Layer 3: a layer comprising a polyamide resin.

Preferred among others are laminates comprising:

Layer 1: a layer comprising a copolymer (III)-based composition (which may be a conductive composition);
Layer 2: a layer comprising an adhesive functional group-containing CTFE copolymer and
Layer 3: a layer comprising a polyamide resin.

As for the other preferred layer composition of the laminate for use as the auto fuel delivery system tube of the invention, there may also be mentioned laminates comprising:

Layer 1: a layer comprising a fluorinated ethylenic polymer composition (which may be a conductive composition);
Layer 2: a layer comprising a polyamide resin;
Layer 3: a layer comprising a CTFE copolymer resin; and
Layer 4: a layer comprising a polyamide resin.

Preferred among others are laminates comprising:

Layer 1 : a layer comprising a copolymer (IV) -based composition (which may be a conductive composition);
Layer 2: a layer comprising a polyamide resin;
Layer 3: a layer comprising an adhesive functional group-containing CTFE copolymer resin; and
Layer 4: a layer comprising a polyamide resin.

Further preferred among others are laminated comprising:

Layer 1: a layer comprising a copolymer (IV-II)-based composition (which may be a conductive composition);
Layer 2: a layer comprising a polyamide resin;
Layer 3: a layer comprising an adhesive functional group-containing CTFE copolymer resin; and
Layer 4: a layer comprising a polyamide resin.

The respective layers in each of the above-mentioned laminates for use as fuel tubes are the products of lamination of the layers in numerical order. The layer 1 is preferably the innermost layer.

EFFECTS OF THE INVENTION

The laminate of the invention, which has the constitution described hereinabove, has a high level of fuel permeation resistance and is also excellent in fuel crack resistance.

BEST MODES FOR CARRYING OUT THE INVENTION

The following examples illustrate the present invention in further detail. These examples are, however, by means limitative of the scope of the invention.

Synthesis Example 1

A polymerization vessel equipped with a stirrer and a jacket capable of containing 174 kg of water was charged with 51 kg of demineralized pure water and, after thorough purging of the inside space with pure nitrogen gas, the nitrogen gas was eliminated by evacuation. Then, 40.6 kg of octafluorocyclobutane, 1.3 kg of chlorotrifluoroethylene [CTFE], 6.6 kg of tetrafluoroethylene [TFE] and 3.9 kg of perfluoro(propyl vinyl ether) [PPVE] were fed to the vessel under pressure, the temperature was adjusted to 35ºC, and stirring was started. Thereto was added 0.33 kg of a 50% (by mass) solution of di-n-propyl peroxydicarbonate [NPP] in methanol as a polymerization initiator to start the polymerization. During the polymerization, a monomer mixture prepared so as to have the same composition as the desired copolymer composition was additionally fed to maintain the vessel inside pressure at 0.8 MPa. After the polymerization, the residual gas in the vessel inside was discharged by evacuation, and the polymer formed was taken out, washed with demineralized pure water and dried to give 19 kg of a CTFE copolymer as a granular powder. The copolymer was then melt-kneaded on a ø 50 mm single-screw extruder at a cylinder temperature of 290ºC to give pellets. The CTFE copolymer obtained in the form of pellets was then heated at 190ºC for 24 hours.

Synthesis Example 2

A polymerization vessel equipped with a stirrer and a jacket capable of containing 174 kg of water was charged with 51 kg of demineralized pure water and, after thorough purging of the inside space with pure nitrogen gas, the nitrogen gas was eliminated by evacuation. Then, 40.6 kg of octafluorocyclobutane, 2.4 kg of chlorotrifluoroethylene [CTFE], 6.6 kg of tetrafluoroethylene [TFE] and 4.4 kg of perfluoro(propyl vinyl ether) [PPVE] were fed to the vessel under pressure, the temperature was adjusted to 35ºC, and stirring was started. Thereto was added 0.21 kg of a 50% (by mass) solution of di-n-propyl peroxydicarbonate [NPP] in methanol as a polymerization initiator to start the polymerization. During the polymerization, a monomer mixture prepared so as to have the same composition as the desired copolymer composition was additionally fed to maintain the vessel inside pressure at 0.8 MPa. After the polymerization, the residual gas in the vessel inside was discharged by evacuation, and the polymer formed was taken out, washed with demineralized pure water and dried to give 19 kg of a CTFE copolymer as a granular powder. The copolymer was then melt-kneaded on a ø 50 mm single-screw extruder at a cylinder temperature of 280ºC to give pellets. The CTFE copolymer obtained in the form of pellets was then heated at 180ºC for 24 hours.

Synthesis Example 3

A horizontal stainless steel autoclave (capacity 1000 L) equipped with a stirrer was deaerated in advance and then charged with 600 L of deionized water and 160 kg of a 10% (by mass) aqueous solution of a fluorinated surfactant ($C_7F_{15}COONH_4$), followed by three repetitions of a nitrogen purging and vacuum deaeration procedure. Thereafter, 100 kg of monomeric hexafluoropropylene [HFP] was fed to the autoclave and, further, a tetrafluoroethylene [TFE]-HFP monomer mixture (TFE:HFP = 86:14 (% by mass)) was fed, the temperature was gradually raised to an autoclave inside atmosphere temperature of 95ºC and the pressure was raised to 1.5 MPaG while stirring at a stirring rate of 200 rpm. Them, 70 kg of a 10% (by mass) aqueous solution of ammonium peroxodisulfate [APS] was added as a polymerization initiator to initiate the reaction. The above-mentioned monomer mixture was fed continuously to maintain the reaction system inside pressure at 1.5 MPaG. After the lapse of 30 minutes following the start of the polymerization, the stirring was discontinued and the autoclave inside gas was released to ordinary pressure to finish the polymerization reaction. An emulsified TFE/HFP binary polymer dispersion with a polymer solid concentration of 4.5% by mass was thus obtained.
Separately, the same stainless steel autoclave as used in the above process was deaerated beforehand and was charged with 600 L of deionized water and 20 kg of the above-mentioned binary polymer emulsion/dispersion, followed by three repetitions of a nitrogen purging and vacuum deaeration procedure. Thereafter, the autoclave was charged with 138 kg of monomeric HFP and then with 4 kg of perfluoro(propyl vinyl ether) [PPVE], the autoclave inside temperature was gradually raised to 95ºC with stirring at a stirring rate of 200 rpm, and the pressure was raised to 4.2 MPaG by feeding a TFE-HFP monomer mixture (TFE:HFP = 87.3:13.7 (% by mass)) under pressure. A 10% (by mass) aqueous APS solution (2.4 kg) was fed as a polymerization initiator to thereby start the polymerization reaction. After start of the reaction, a 10% (by mass) aqueous solution of APS was continuously supplemented at a rate of 22 g/minute. During the reaction, at the times of arrival of the amount of the above-mentioned monomer mixture at 25% by mass, 50% by mass and 75% by mass of the total amount of the monomers fed, 180 g of PPVE was fed each time. The above monomer mixture was continuously fed to maintain the system inside pressure at 4.2 MPaG. After the lapse of 55 minutes following the start of polymerization, the addition of the 10% (by mass) aqueous solution of APS and the stirring were discontinued, the autoclave inside gas was released until ordinary pressure, and the polymerization reaction was finished. A portion of the latex obtained was evaporated to dryness at 200ºC for 1 hour, and the polymer concentration was calculated based on the solid matter and found to be 20.2% by mass.
This emulsified dispersion was transferred to a 3000-liter autoclave equipped with a stirrer, and deionized water was added thereto with stirring to adjust the polymer solid concentration to 10.0% by mass. Then, 40 kg of 60% nitric acid was added and coagulation was caused to occur at a stirring rate of 40 rpm and, after separation into a solid phase and a liquid phase, the water phase was removed. The white powder obtained after washing with deionized water was deprived of water by heating in an air convection oven at 170ºC for 20 hours to give a white powder
Then, sodium carbonate ($Na_2CO_3$) was added to this white powder to a final concentration of 30 ppm and, after uniform dispersion, the mixture was subjected to stabilization (wet heat treatment) and simultaneous melt-pelletization on a twin-screw extruder (product of Japan Steel Works). This extruder had a screw diameter of 32 mm and an L/D ratio of 52.5 and was constituted of a feed zone, a plasticizing zone, a stabilization treatment zone, a vent zone and a metering zone in that order from the material feeding side. The stabilization zone had a temperature of 360ºC, the screw speed was 200 rpm, and the raw material was fed at a rate of 15 kg/hour. Air and water were fed at respective flow rates of 0.93 kg/hour and 0. 6 kg of water/hour and, while the reaction was allowed to proceed, pelletization was carried out to give a TFE/HFP/PPVE copolymer [FEP].

Synthesis Example 4

Using a twin-screw extruder (ø 45 mm) provided with a side feeder function, 91 parts by mass of the FEP in the form of pellets as obtained in Synthesis Example 3 and 9 parts by mass of a conductive filler (acetylene black) were melt-kneaded at a cylinder temperature of 330ºC to 350ºC to give a conductive FEP composition in the form of pellets. The pellet form conductive FEP composition obtained was heated at 150ºC for 24 hours.
A rod excised from the strand obtained in melt flow rate measurement had a surface resistance value of $10^5$ Ω·cm/cm and the inner layer of the three-layer tube of Example 2 as produced using this conductive FEP composition also had a surface resistance value of $10^5$ Ω·cm/cm.

Synthesis Example 5

A 174-liter autoclave was charged with 46.5 L of distilled water and, after sufficient nitrogen purging, further charged with 2.4 kg of perfluoro(propyl vinyl ether) [PPVE] and 49 kg of hexafluoropropylene [HFP] , and the system inside temperature was maintained at 35ºC and the rate of stirring at 200 rpm. Then, tetrafluoroethylene [TFE] was fed under pressure to 1.07 MPa, and the polymerization was started by addition of 128 g of the polymerization initiator di-n-propyl peroxydicarbonate [NPP]. Since otherwise the system inside pressure dropped with the progress of the polymerization, TFE was fed continuously to maintain the system inside pressure at 1.07 MPa. At the time of arrival of the amount of TFE additionally fed at 9 kg, 0.7 kg of PPVE was added and, at the time of arrival of the amount of TFE additionally fed at 21 kg, the polymerization was discontinued and, after pressure release to ordinary pressure, the TFE/HFP/PPVE copolymer obtained was washed with water and dried to give 20.2 kg of a powder.
Then, using a single-screw extruder (ø 50 mm) , the above powder was melt-kneaded at a cylinder temperature of 290ºC to give pellets. The thus-obtained pellets of the TFE/HFP/PPVE copolymer [FEP] were heated at 180ºC for 24 hours.

Synthesis Example 6

Using a twin-screw extruder (ø 45 mm) provided with a side feeder function, 91 parts by mass of the CTFE copolymer in the form of pellets as obtained in Synthesis Example 1 and 9 parts by mass of a conductive filler (acetylene black) were melt-kneaded at a cylinder temperature of 290ºC to give a conductive CTFE composition in the form of pellets. The pellet form conductive CTFE composition obtained was heated at 190ºC for 24 hours.
A rod cut out from the strand obtained in melt flow rate measurement had a surface resistance value of $10^5$ Ω·cm/cm and the inner layer of the two-layer tube of Comparative Example 1 as produced using this conductive CTFE composition also had a surface resistance value of $10^5$ Ω·cm/cm.

Synthesis Example 7

A polymerization vessel equipped with a stirrer and a jacket capable of containing 174 kg of water was charged with 52.7 kg of demineralized pure water and, after thorough purging of the inside space with pure nitrogen gas, the nitrogen gas was eliminated by evacuation. Then, the vessel was charged with 31.5 kg of perfluorocyclobutane and 123 g of perfluoro(1,1,5-trihydro-1-pentene) [H2P], and the system inside was maintained at 20ºC and a stirring rate of 200 rpm. Thereafter, tetrafluoroethylene [TFE] was fed to the vessel under pressure until 0.78 MPa, followed by further feeding of ethylene [Et] under pressure to 0.89 MPa. Thereafter, the system inside temperature was adjusted to 35ºC, 150 g of cyclohexane was then added and the polymerization was started by addition of 200 g of a 50% solution of di-n-propyl peroxydicarbonate [NPP] in methanol. Since otherwise the system inside pressure dropped with the progress of the polymerization, a mixed gas composed of TFE and Et (57/43 mole percent) was continuously fed to maintain the vessel inside pressure at 1.20 MPa. A total of 0.85 kg of perfluoro(1,1,5-trihydro-1-pentene) [H2P] was also continuously fed. In this way, the polymerization was carried out continuously for 20 hours. Then, after pressure release to atmospheric pressure, the TFE/Et/H2P copolymer formed was washed with water and dried to give 30 kg of a powder. The copolymer was then melt-kneaded on a single-screw extruder (ø 50 mm) at a cylinder temperature of 290ºC to give pellets. The TFE/Et/H2P copolymer pellets obtained were then heated at 180ºC for 24 hours.

Synthesis Example 8

An autoclave was charged with 380 L of distilled water and, after thorough nitrogen purging, charged with 166 kg of octafluorocyclobutane, 83 kg of hexafluoropropylene and 0.3 kg of perfluoro(1,1,5-trihydro-1-pentene), and the system inside was maintained at 35ºC and a stirring rate of 200 rpm. Thereafter, tetrafluoroethylene was fed to the vessel under pressure until 0.87 MPa, followed by further feeding of ethylene under pressure to 0.95 MPa. Then, the polymerization was started by addition of 9 kg of di-n-propyl peroxydicarbonate. Since otherwise the system inside

pressure dropped with the progress of the polymerization, a tetrafluoroethylene/ethylene/hexafluoropropylene (= 46/44/10 mole percent) mixed gas was continuously fed to maintain the vessel inside pressure at 0.95 MPa. A total of 3.2 kg of perfluoro(1,1,5-trihydro-1-pentene) was also continuously fed. In this way, the polymerization was carried out with stirring continuously for 20 hours. Then, after pressure release to atmospheric pressure, the reaction product was washed with water and dried to give 250 kg of a powder (adhesive fluororesin). The powder obtained was extruded from a single-screw extruder (ø 50 mm) to give extrudate pellets.

Synthesis Example 9

A 88-kg portion of the powder obtained in Synthesis Example 8 was blended with 12 kg of a conductive filler (acetylene black) on a Henschel mixer and the mixture was then melt-kneaded on a twin-screw extruder to give pellets.
The copolymers obtained in Synthesis Examples 1 to 9 were evaluated for physical properties, as follows.

(1) Determination of number of carbonate groups

Each copolymer in the form of a white powder or cut pieces derived from melt-extruded pellets was compression molded at room temperature to give a film with a thickness of 50 to 200 $\mu$m. This film was subjected to infrared absorption spectrometry, the absorbance of the peak [ν(C=O) peak] appearing at the absorption wavelength of 1810 to 1815 $cm^{-1}$ and ascribable to the carbonate [-OC(=O)O-] carbonyl group was measured, and the number N of carbonate groups per $10^6$ copolymer main chain carbon atoms was calculated according to the formula (a) given below.

$$N = 500AW/\varepsilon df \qquad (a)$$

A: Absorbance of carbonate [-OC(=O)O-] group-due ν (C=O) peak
ε: Molar absorption coefficient for carbonate [-OC(=O)O-] group-due ν(C=O) peak. Based on the data concerning model compounds, it was estimated that ε = 170 ($l \cdot cm^{-1} \cdot mol^{-1}$).
W: Average molecular weight of monomer as calculated from copolymer composition
d: Film density ($g/cm^3$)
f: Film thickness (mm)
In infrared spectrometry, scanning was repeated 40 times using a Perkin-Elmer model 1760X FT-IR spectrometer (product of Perkin-Elmer). The IR spectrum obtained was subjected to automatic baseline judgment using Perkin-Elmer Spectrum for Windows Ver. 1. 4C and the absorbance of the peak at 1810 to 1815 $cm^{-1}$ was determined. The film thickness was measured using a micrometer.

(2) Copolymer composition determination

The composition of each of the copolymers of Synthesis Examples 1, 2 and 6 was determined based on $^{19}$F-NMR spectrometry and elemental analysis for chlorine. The composition of each of the copolymers of Synthesis Examples 3, 4, 5 and 7 and the copolymer THV-500 was determined based on $^{19}$F-NMR spectrometry.

(3) Melting point (Tm) measurement

Using a Seiko differential scanning calorimeter [DSC], melting peak recording was made while raising the temperature at a programming rate of 10ºC/minute, and the temperature corresponding to the maximum value was regarded as the melting point (Tm).

(4) Fluororesin melt flow rate (MFR) measurement

Using a melt indexer (product of Toyo Seiki Seisakusho), the mass (g) of the polymer flowing out through a nozzle with an inside diameter of 2 mm and a length of 8 mm per unit time (10 minutes) at each measurement temperature under a load of 5 kg was measured.

(5) Single layer fuel permeability coefficient measurement

The copolymer pellets to be used in forming a layer of a tubular laminate were placed in a mold with a diameter of 120 mm, the mold was set on a pressing machine heated at 300ºC, and melt pressing was carried out at a pressure

of about 2.9 MPa to give a 0.15-mm-thick film. The sheet was placed in a SUS 316 stainless steel permeability coefficient measurement cup (inside diameter 40 mm ø, 20 mm in height) containing 18 ml of CE10 (fuel prepared by blending an isooctane-toluene (50 : 50 by volume) mixture with 10% by volume of ethanol) , and changes in mass were measured at 60ºC for 1000 hours. The fuel permeability coefficient (g·mm/$m^2$/day) was calculated from the change in mass per hour, the surface area of the sheet in contact with the fuel and the sheet thickness.
The results obtained are shown in Table 2.
Table 2

| | Composition (mole %) | | | | | | Melting point (°C) | MFR(g/10min) (Measurement temperature) | Number of carbonate groups per $10^6$ main chain carbon atoms | Fuel permeability coefficient (g·mm/m$^2$/day) |
|---|---|---|---|---|---|---|---|---|---|---|
| | CTFE | TFE | PPVE | HFP | Et | H2P | | | | |
| Synthesis Example 1 | 28.1 | 69.9 | 2.0 | | | | 242 | 15 (297°C) | 95 | 0,31 |
| Synthesis Example 2 | 34.7 | 63.2 | 2.1 | | | | 230 | 18 (297°C) | 101 | 0.25 |
| Synthesis Example 3 | | 91.2 | 0.4 | 8.4 | | | 253 | 13 (297°C) | ND | 0.25 |
| Synthesis Example 4 | | 91.2 | 0.4 | 8.4 | | | 253 | 4 (297°C) | ND | 0.25 |
| Synthesis Example 5 | | 88.6 | 2.4 | 9.0 | | | 224 | 15 (265°C) | 110 | 0.34 |
| Synthesis Example 6 | 28.1 | 69.9 | 2.0 | | | | 242 | 4 (297°C) | 82 | 0.31 |
| Synthesis Example 7 | | 57.0 | | | 41.8 | 1.2 | 254 | 13 (297°C) | 75 | 2.41 |
| Synthesis Example 8 | | 46.2 | | 9.5 | 43.8 | 0.5 | 194 | 41 (297°C) | 255 | 6.5 |
| Synthesis Example 9 | | 46.2 | | 9.5 | 43.8 | 0.5 | 194 | 5.2 (297°C) | 250 | 6.2 |

* In the table, "ND" indicates that the content was below the detection limit of the FT-IR spectrometer.

** In the table, "Et" stands for ethylene and "H2P" for perfluoro(1,1,5-trihydro-1-pentene).

Example 1

Using a three-resin three-layer tube extruding machine (product of Plabor Co., Ltd. (Plastic Kogaku Kenkyusho)) with a multimanifold die mounted thereon and feeding polyamide 12 (trade name: Vestamid X7297, product of Degussa Huls AG) for layer (C), the copolymer of Synthesis Example 1 for layer (B) and the copolymer of Synthesis Example 3 for layer (A) respectively to three extruders, a three-resin three-layer multilayer tube with an outside diameter of 8 mm and an inside diameter of 6 mm was molded under the extrusion conditions shown in Table 3.
The multilayer tube obtained was measured for interlaminar bond strength and fuel permeability coefficient by the methods described below.

(A) Initial bond strength measurement

Test pieces 1 cm in width were cut out from the tubular laminate and subjected to 180-degree peel testing on a Tensilon universal testing machine at a rate of 25 mm/minute, and the mean of five maximum points on an elongation-tensile strength graph was determined as the initial bond strength (N/cm). For a constitution comprising three or more layers, the value refers to the site (between layers) where the interlaminar bond strength is weakest.

(B) Bond strength measurement after fuel storage

A 40-cm-long section was cut out from the tubular laminate and fitted with a 120-ml SUS 316 stainless steel reservoir tank by means of a Swagelock system, and a fuel prepared by blending CM15 (50:50 (by volume) isooctane-toluene mixture) with 15% by volume of methanol was placed therein and stored at 60ºC for 1000 hours in a tightly closed condition. Thereafter, the bond strength (N/cm) was measured in the same manner as described above under (A) and reported as the bond strength after fuel storage.

(C) Fuel permeation rate measurement of laminate

A 40-cm-long section was cut off from the tubular laminate and fitted with a 120-ml SUS 316 stainless steel reservoir tank by means of a Swagelock system, and the permeation of CE10 at 60ºC was measured according to SAE J 1737, and the fuel permeation rate (g/$m^2$/day) was calculated using the wall thickness of the tubular laminate.

(D) Innermost layer surface crack testing after laminate immersion in fuel

A 15-cm-long tubular laminate specimen was divided lengthways into two halves, which were then immersed in CM15 and at the same time bent to a diameter of 5 cm and, after 10 minutes, taken out of CM15 and observed as to the occurrence of cracking on the innermost surface layer.
The results thus obtained are shown in Table 3.

Example 2

A three-resin three-layer multilayer tube with an outside diameter of 8 mm and an inside diameter of 6 mm was molded under the extrusion conditions shown in Table 3 by feeding polyamide 12 for layer (C) , the copolymer of Synthesis Example 1 for layer (B) and the copolymer of Synthesis Example 4 for layer (A) respectively to three extruders.

Example 3

A three-resin three-layer multilayer tube with an outside diameter of 8 mm and an inside diameter of 6 mm was molded under the extrusion conditions shown in Table 3 by feeding polyamide 12 for layer (C) , the copolymer of Synthesis Example 2 for layer (B) and the copolymer of Synthesis Example 5 for layer (A) respectively to three extruders.

Example 4

Using a two-resin two-layer tube extruding machine (product of Plabor Co. , Ltd.) with a multimanifold die mounted thereon and feeding polyamide 12 (trade name: Vestamid X7297, product of Degussa Huls AG) for layer (C) and the copolymer of Synthesis Example 2 for layer (B) respectively to two extruders, a two-resin two-layer multilayer tube (a) with an outside diameter of 8 mm and an inside diameter of 6.42 mm was molded under the extrusion conditions shown in Table 4.
Separately, using the ETFE of Synthesis Example 7 for layer (A), a single-layer tube (b) with an outside diameter of 6.4

mm and'an inside diameter of 6.0 mm was molded on a single layer tube extruding machine under the extrusion conditions shown in Table 4.

The outer layer surface of this single-layer ETFE tube was surface-treated by sodium etching treatment and a rod-shaped heating device was then inserted into the inside of the tube.

Then, the surface-treated single-layer tube (b), together with the heating device inserted therein, was inserted into the inside of the previously molded multilayer tube (a), the whole was subjected to heat treatment in a heating apparatus maintained at a temperature of 240ºC, namely a temperature lower than the melting point of the copolymer of Synthesis Example 7 to form the inside layer and higher than the melting point of the copolymer of Synthesis Example 2 to form the intermediate layer, for bonding of the multilayer tube (a) and the single-layer tube (b) to each other and, then, the heating device was drawn out. A multilayer tube having a three-layer structure was thus obtained.

Example 5

Using a four-resin four-layer tube extruding machine (product of Plabor Co. , Ltd.) with a multimanifold die mounted thereon and feeding polyamide 12 (trade name: Vestamid X7297, product of Degussa Huls AG) for layer (C) and layer (D), the copolymer of Synthesis Example 2 for layer (B) and the fluororesin of Synthesis Example 8 for layer (A) respectively to four extruders, a four-resin four-layer multilayer tube with an outside diameter of 8 mm and an inside diameter of 6 mm was molded under the extrusion conditions shown in Table 5.

Example 6

A four-layer multilayer tube with an outside diameter of 8 mm and an inside diameter of 6 mm was molded under the extrusion conditions shown in Table 5 by feeding polyamide 12 (trade name: Vestamid X7297, product of Degussa Huls AG) for layer (C) and layer (D), the copolymer of Synthesis Example 2 for layer (B) and the resin composition of Synthesis Example 9 for layer (A) respectively to four extruders.

Example 7

Using a five-resin five-layer tube extruding machine (product of Plabor Co. , Ltd.) with a multimanifold die mounted thereon and feeding polyamide 12 (trade name: Vestamid X7297, product of Degussa Huls AG) for layer (C) and layer (D), the copolymer of Synthesis Example 2 for layer (B) , the fluororesin of Synthesis Example 8 for layer (A) and, further, the material of Synthesis Example 9 for antistatic innermost layer respectively to five extruders, a five-layer multilayer tube with an outside diameter of 8 mm and an inside diameter of 6 mm was molded under the extrusion conditions shown in Table 5.

Comparative Example 1

Using a two-resin two-layer tube extruding machine (product of Plabor Co. , Ltd.) with a multimanifold die mounted thereon and feeding polyamide 12 (trade name: Vestamid X7297, product of Degussa Huls AG) for layer (C) and the copolymer of Synthesis Example 6 for layer (B) respectively to two extruders, a two-resin two-layer multilayer tube with an outside diameter of 8 mm and an inside diameter of 6 mm was molded under the extrusion conditions shown in Table 3.

Comparative Example 2

By feeding polyamide 12 for layer (C) and the copolymer of Synthesis Example 4 as layer (A) respectively to two extruders, a two-resin two-layer multilayer tube with an outside diameter of 8 mm and an inside diameter of 6 mm was molded under the extrusion conditions shown in Table 3.

Table 3

| | | Example 1 | Example 2 | Example 3 | Comparative Example 1 | Comparative Example 2 |
|---|---|---|---|---|---|---|
| Layer (A) | Material | Synthesis Example 3 | Synthesis Example 4 | Synthesis Example 5 | - | Synthesis Example 4 |
| | Cylinder temperature (°C) | 280~310 | 280~320 | 260~280 | | 280~320 |
| | Adapter temperature (°C) | 300 | 310 | 280 | | 310 |
| Layer (B) | Material | Synthesis Example 1 | Synthesis Example 1 | Synthesis Example 2 | Synthesis Example 6 | - |
| | Cylinder temperature (°C) | 260~290 | 260~290 | 250~280 | 260~295 | |
| | Adapter temperature (°C) | 285 | 285 | 280 | 290 | |
| Layer (C) | Material | PA12 | PA12 | PA12 | PA12 | PA12 |
| | Cylinder temperature (°C) | 210~245 | 210~245 | 210~245 | 210~245 | 210~245 |
| | Adapter temperature (°C) | 245 | 245 | 245 | 245 | 245 |
| Extrusion conditions | Die temperature (°C) | 290 | 290 | 285 | 290 | 290 |
| | Line speed (m/min) | 8 | 6 | 8 | 6 | 6 |
| | Water temperature (°C) | 10 | 10 | 10 | 10 | 10 |
| Layer/wall thickness | Inner layer (mm) | 0.2 | 0.2 | 0.2 | 0.3 | 0.3 |
| | Intermediate layer (mm) | 0.1 | 0.1 | 0.1 | - | - |
| | Outer layer (mm) | 0.7 | 0.7 | 0.7 | 0.7 | 0.7 |
| | Total wall thickness (mm) | 1 | 1 | 1 | 1 | 1 |
| Initial bond strength (N/cm) | | 41 | 43 | 35 | 39 | 8 |
| Bond strength after fuel storage (N/cm) | | 35 | 36 | 30 | 34 | Spontaneous peeling |
| Fuel permeation rate ($g/m^2/day$) | | 0.66 | 0.67 | 0.70 | 0.67 | 0.69 |

(continued)

| | Example 1 | Example 2 | Example 3 | Comparative Example 1 | Comparative Example 2 |
|---|---|---|---|---|---|
| Crack formation upon immersion in fuel | No | No | No | Yes | No |

Table 4

| | | Example 4 |
|---|---|---|
| Layer (A) (Single layer extrusion) | Material | Synthesis Example 7 |
| | Cylinder temperature (°C) | 290~320 |
| | Die temperature (°C) | 310 |
| Layer (B) | Material | Synthesis Example 2 |
| | Cylinder temperature (°C) | 260~290 |
| | Adapter temperature (°C) | 285 |
| Layer (C) | Material | PA12 |
| | Cylinder temperature (°C) | 210~245 |
| | Adapter temperature (°C) | 245 |
| Layer (A) / layer (B) two-layer extrusion conditions | Die temperature (°C) | 285 |
| | Line speed (m/min) | 8 |
| | Water temperature (°C) | 10 |
| Layer/wall thickness after bonding of tubes (a) and (b) | Inner layer (mm) | 0.2 |
| | Intermediate layer (mm) | 0.2 |
| | Outer layer (mm) Outer layer (mm) | 0.6 |
| | Total wall thickness (mm) | 1 |
| Initial bond strength (N/cm) | | 25 |
| Bond strength after fuel storage (N/cm) | | 20 |
| Fuel permeation rate ($g/m^2/day$) | | 0.8 |
| Crack formation upon immersion in fuel | | No |

Table 5

| | | Example 5 | Example 6 | Example 7 |
|---|---|---|---|---|
| Layer (A) | Material (Antistatic layer) | - | - | Synthesis Example 9 |
| | Cylinder temperature (°C) | | | 260~270 |
| | Adapter temperature (°C) | | | 270 |

(continued)

| | | Example 5 | Example 6 | Example 7 |
|---|---|---|---|---|
| Layer (A) | Material | Synthesis Example 8 | Synthesis Example 9 | Synthesis Example 8 |
| | Cylinder temperature (°C) | 260~270 | 260~270 | 260~270 |
| | Adapter temperature (°C) | 270 | 270 | 270 |
| Layer (D) | Material | PA12 | PA12 | PA12 |
| | Cylinder temperature (°C) | 210~245 | 210~245 | 210~245 |
| | Adapter temperature (°C) | 245 | 245 | 245 |
| Layer (B) | Material | Synthesis Example 2 | Synthesis Example 2 | Synthesis Example 2 |
| | Cylinder temperature (°C) | 260~280 | 260~280 | 260~280 |
| | Adapter temperature (°C) | 280 | 280 | 280 |
| Layer (C) | Material | PA12 | PA12 | PA12 |
| | Cylinder temperature (°C) | 210~245 | 210~245 | 210~245 |
| | Adapter temperature (°C) | 245 | 245 | 245 |
| Extrusion conditions | Die temperature (°C) | 280 | 280 | 280 |
| | Line speed (m/min) | 12 | 12 | 12 |
| | Water temperature (°C) | 12 | 12 | 12 |
| Layer/wall thickness | Innermost layer (mm) | - | - | 0.05 |
| | Inner layer (mm) | 0.1 | 0.1 | 0.05 |
| | Intermediate layer 1 (mm) | 0.1 | 0.1 | 0.1 |
| | Intermediate layer 2 (mm) | 0.2 | 0.2 | 0.2 |
| | Outer layer (mm) | 0.6 | 0.6 | 0.6 |
| | Total wall thickness (mm) | 1 | 1 | 1 |
| Initial bond strength (N/cm) | | 36 | 37 | . 37 |
| Bond strength after fuel storage (N/cm) | | 31 | 32 | 32 |
| Fuel permeation rate (g/m$^2$/day) | | 0.85 | 0.82 | 0.85 |
| Crack formation upon immersion in fuel | | No | No | No |

As shown in Tables 3 to 5, it was found that while the tube of Comparative Example 1 with the CTFE copolymer layer (B) serving as the inner layer cracks, the tubes of Examples 1 to 7 having the CTFE copolymer layer (B) as an

intermediate layer will not crack. In Comparative Example 2 having no CTFE copolymer layer (B), the interlaminar bond strength was found to be markedly low.
The results of Examples 5 to 7 in which a layer (D) was provided revealed that four-resin four-layer (in Example 7, five-resin five-layer) coextrusion molding is possible and the line speed can be increased.

INDUSTRIAL APPLICABILITY

The laminate of the invention can be suitably used, for example, as an auto fuel tube which is required to have both a high level of fuel permeation resistance and a high level of fuel crack resistance.

## Claims

**1.** A laminate having:

a layer (A) comprising a fluorinated ethylenic polymer;
a layer (B) comprising a chlorotrifluoroethylene copolymer; and
a layer (C) comprising a fluorine-free organic material (P);
said fluorinated ethylenic polymer being different from said chlorotrifluoroethylene copolymer forming said layer (B) in one and the same laminate and
said layer (A), said layer (B), and said layer (C) being in that order.

**2.** The laminate according to Claim 1
which further has a layer (D) comprising a fluorine-free organic material (Q) between the layer (A) and the layer (B).

**3.** The laminate according to Claim 2,
wherein the layer (D) is in contact with the layer (A) and the layer (B), and
said layer (B) is in contact with the layer (C).

**4.** The laminate according to Claim 1,
wherein the layer (B) is in contact with the layer (A) and the layer (C).

**5.** The laminate according to Claim 1, 2, 3 or 4,
wherein the chlorotrifluoroethylene copolymer is a copolymer consisting of chlorotrifluoroethylene units, tetrafluoroethylene units, and monomer (M) units derived from a monomer (M) copolymerizable with chlorotrifluoroethylene and tetrafluoroethylene and
wherein the total proportion of said chlorotrifluoroethylene units and said tetrafluoroethylene units is 90 to 99.9 mole percent and the proportion of said monomer (M) units is 10 to 0.1 mole percent.

**6.** The laminate according to Claim 1, 2, 3, 4 or 5,
wherein the fluorinated ethylenic polymer is a copolymer consisting of 70 to 95 mole percent of tetrafluoroethylene units and 5 to 30 mole percent in total of hexafluoropropylene units and perfluoro (alkyl vinyl ether) units derived from one or more compounds represented by the general formula $CF_2$=CF-ORf (wherein Rf represents a perfluoroalkyl group containing 1 to 5 carbon atoms).

**7.** The laminate according to Claim 1, 2, 3, 4 or 5,
wherein the fluorinated ethylenic polymer is a copolymer consisting of 0 to 60 mole percent in total of fluoroolefin units derived from a fluoroolefin represented by the general formula (i) given below and/or perfluoro(alkyl vinyl ether) units derived from a perfluoro (alkyl vinyl ether) represented by the general formula (ii) given below, 20 to 80 mole percent of tetrafluoroethylene units and 20 to 80 mole percent of ethylene units:

$$CX^3X^4{=}CX^1(CF_2)_nX^2 \qquad (i)$$

(wherein $X^1$, $X^3$ and $X^4$ are the same or different and each represents hydrogen or fluorine atom, $X^2$ represents hydrogen, fluorine or chlorine atom and n represents an integer of 1 to 10) ;

$$CF_2{=}CF{-}ORf^1 \qquad (ii)$$

(wherein $Rf^1$ represents a perfluoroalkyl group containing 1 to 5 carbon atoms).

**8.** The laminate according to Claim 1, 2, 3, 4 or 5, wherein the fluorinated ethylenic polymer is a poly(vinylidene fluoride) or a copolymer consisting of 15 to 84 mole percent of vinylidene fluoride units, 15 to 84 mole percent of tetrafluoroethylene units, and 0 to 30 mole percent of hexafluoropropylene units.

**9.** The laminate according to Claim 1, 2, 3, 4, 5, 6, 7 or 8, wherein the layer (A) comprises the fluorinated ethylenic polymer and, further, an electrically conductive filler.

**10.** The laminate according to Claim 1, 2, 3, 4, 5, 6, 7, 8 or 9, wherein the fluorine-free organic material comprises at least one species selected from the group consisting of a ethylene/vinyl alcohol copolymer-based resin, a polyamide resin and a polyolefin resin.

**11.** The laminate according to Claim 1, 2, 3, 4, 5, 6, 7, 8, 9 or 10 which is a tube or hose.

**12.** The laminate according to Claim 11, wherein the layer (A) is the innermost layer.

**13.** The laminate according to Claim 11 or 12 which is an auto fuel delivery system tube.

**INTERNATIONAL SEARCH REPORT**

International application No. PCT/JP2006/312259

A. CLASSIFICATION OF SUBJECT MATTER
*B32B27/30*(2006.01)i, *B32B1/08*(2006.01)i, *F16L11/04*(2006.01)i

According to International Patent Classification (IPC) or to both national classification and IPC

B. FIELDS SEARCHED

Minimum documentation searched (classification system followed by classification symbols)
B32B1/00-43/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-358959 A (Daikin Industries, Ltd.), 24 December, 2004 (24.12.04), Claims 1, 8; Par. Nos. [0009] to [0011], [0014], [0030], [0032], [0046], [0058], [0063], [0065]; tables 2, 3<br>& EP 1627731 A1 & WO 2004/098880 A1 | 1,4-13<br>2,3,5-13 |
| Y | JP 2002-357285 A (Asahi Glass Co., Ltd.), 13 December, 2002 (13.12.02), Claim 1; Par. Nos. [0001], [0012]<br>& US 6656553 B2 & EP 1276604 B1<br>& WO 2001/081077 A1 | 2,3,5-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>31 August, 2006 (31.08.06) | Date of mailing of the international search report<br>12 September, 2006 (12.09.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/312259

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-210892 A (Tokai Rubber Industries, Ltd.), 31 July, 2002 (31.07.02), Full text (Family: none) | 1-13 |
| A | JP 2002-327018 A (Asahi Glass Co., Ltd.), 15 November, 2002 (15.11.02), Full text & US 2002/0119319 A1 & EP 1236746 A1 | 1-13 |
| A | JP 2002-144499 A (Ausimont S.p.A.), 21 May, 2002 (21.05.02), Full text & US 6706351 B2 & EP 1188555 A2 | 1-13 |
| A | JP 2000-291849 A (Asahi Glass Co., Ltd.), 20 October, 2000 (20.10.00), Full text & US 6679297 B1 & EP 1156254 B1 & WO 2000/046536 A1 | 1-13 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002213655 A
- JP 2002267054 A
- WO 0118142 A
- JP 20004358959 A
- JP H03174018 A